(19) Europäisches Patentamt
European Patent Office
Office européen des brevets

(11) Publication number: **0 175 482**
**B1**

(12) # EUROPEAN PATENT SPECIFICATION

(45) Date of publication of patent specification: **01.06.88**

(51) Int. Cl.$^4$: **C 09 B 62/10,** D 06 P 1/382, D 06 P 3/85

(21) Application number: **85305870.9**

(22) Date of filing: **16.08.85**

(54) **Reactive phthalocyanine dyes.**

(30) Priority: **16.08.84 JP 170741/84**

(43) Date of publication of application: **26.03.86 Bulletin 86/13**

(45) Publication of the grant of the patent: **01.06.88 Bulletin 88/22**

(84) Designated Contracting States: **CH DE FR GB IT LI**

(56) References cited:
**EP-A-0 014 318**
**DE-A-2 904 511**
**GB-A-1 208 553**
**GB-A-2 034 740**

(73) Proprietor: **MITSUBISHI CHEMICAL INDUSTRIES LIMITED**
**5-2, Marunouchi 2-chome Chiyoda-ku**
**Tokyo 100 (JP)**

(72) Inventor: **Niwa, Toshio**
**No. 8-7 Utsukushigaoka 5-chome Midori-ku**
**Yokohama-shi Kanagawa (JP)**
Inventor: **Himeno, Kiyoshi**
**No. 3-255 Nishimagari-machi Yahatanishi-ku**
**Kitakyushu-shi Fukuoka (JP)**
Inventor: **Hihara, Toshio**
**No. 1-9-503 Azamino 3-chome Midori-ku**
**Yokohama-shi Kanagawa (JP)**
Inventor: **Shimizu, Kanji**
**No. 28-6, Umegaoka Midori-ku**
**Yokohama-shi Kanagawa (JP)**

(74) Representative: **Moore, Anthony John et al**
**Gee & Co. Chancery House Chancery Lane**
**London WC2A 1QU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 175 482 B1

**Description**

This invention relates to reactive phthalocyanine dyes, which are utilized as Turkish blue dyes.

As dyes for dyeing mixed polyester fiber and cellulose fiber to provide Turkish blue-dyed mixed fiber, the dyes represented by the following general formula are known, as described in Japanese Patent Application (OPI) No. 24,489/78:

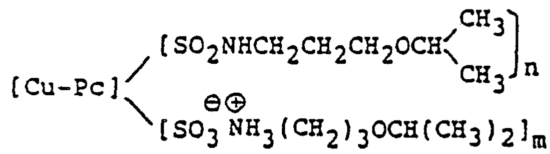

Wherein [Cu-Pc] represents a copper phthalocyanine residue; m represents a number of about 0.2: and n represents a number of about 2.5. (The term (OPI) as used herein refers to "published unexamined Japanese patent application".)

However, these dyes do not always have sufficient color fastness to washing and to dry cleaning and an aim of this invention is to provide a phthalocyanine dye capable of dyeing cellulose fiber or mixed polyester fiber and cellulose fiber to provide Turkish blue-dyed fiber or cloth having excellent color fastness both to light and to washing.

According to the present invention there is provided a reactive phthalocyanine dye represented by the following general formula (I):

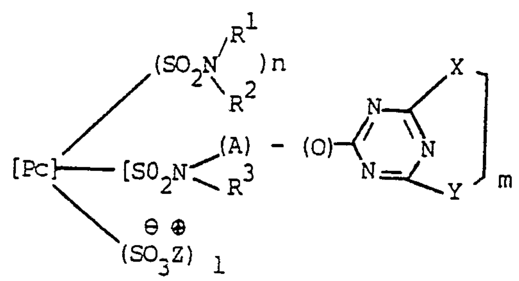

[I]

wherein [Pc] represents a copper phthalocyanine residue or a nickel phthalocyanine residue; $R^1$, $R^2$ and $R^3$ each represents a hydrogen atom, a substituted or unsubstituted alkyl group, preferably having 1 to 10 carbon atoms (including, as hereinafter, the carbon atoms of substituents, if any), a cyclohexyl group, and allyl group or a substituted or unsubstituted aryl group, preferably having 6 to 8 carbon atoms; (A) represents a substituted or unsubstituted alkylene group, preferably having 2 to 4 carbon atoms, a substituted or unsubstituted arylene group, preferably having 6 carbon atoms, an aralkylene group, preferably having 7 to 8 carbon atoms or $R^7$—O—$R^8$ (wherein $R^7$ and $R^8$ each represents an alkylene group, preferably having 2 or 3 carbon atoms); X represents a fluorine atom or chlorine atom; Y represents —$NR^4R^5$ (wherein $R^4$ and $R^5$ each represents a hydrogen atom, a substituted or unsubstituted alkyl group, preferably having 1 to 10 carbon atoms, an alkenyl group, preferably having 3 to 5 carbon atoms, a cyclohexyl group, an aryl group, preferably having 6 to 8 carbon atoms, an aralkyl group, preferably having 7 to 10 carbon atoms or wherein —$NR^4R^5$, together represent a 5-membered or 6-membered nitrogen-containing hetrocyclic ring formed by bonding $R^4$ and $R^5$) or —$OR^6$ (wherein $R^6$ represents a hydrogen atom, a substituted or unsubstituted alkyl group, preferably having 1 to 6 carbon atoms, an alkenyl group, preferably having 3 to 5 carbon atoms, a cyclohexyl group, an aryl group, preferably having 6 to 8 carbon atoms, or an aralkyl group, preferably having 7 to 10 carbon atoms); Z represents a metal atom or an amine base; l represents a real number of 0 to 0.2; m represents a real number of 1 to 4; and n represents a real number of 0 to 2.

Reactive phthalocyanine dyes similar to those of the general formula (I) of the present invention have been previously described in various prior specifications as listed below, but in none of these is a N-heterocyclic group substituted with a fluorine or chlorine atom and an amine group connected to the group $SO_2N$—(A) by an oxygen atom, as in the present dyes:

DE—A—2904511 (wherein connection with the heterocyclic group and the $SO_2N$ group is via à —$CH_2$-sulfophenyl-NH-group);

GB 2034740 (wherein said connection is via an arylene group substituted by $SO_3H$ and/or COOH and linked to an NH or N-alkyl group);

EP—A—014318 (wherein said connection is via a linking group which can be aliphatic or aromatic and can have keto or other groups in its chain, connected to NH or N-alkyl); and

GB—A—1208553 (wherein said connection is via an alkylene-NH or —N-alkyl group).

Thus the structure of the present dyes is distinguished by the presence of the oxygen atom adjacent to the N-heterocyclic group in the above general formula, and the present dyes are useful for the dyeing of

mixtures of cellulose and polyester fibres, which is not disclosed for the aforesaid known dyes.

The reactive phthalocyanine dyes of the above general formula (I) will now be described in more detail.

Preferred examples of the unsubstituted alkyl group represented by $R^1$, $R^2$ and $R^3$ in general formula (I) include a methyl group, an ethyl group and a straight chain or branched chain propyl, butyl, pentyl, hexyl, heptyl or octyl group. Preferred examples of the substituted alkyl group include alkoxy-substituted lower alkyl groups such as a methoxyethyl group, an ethoxyethyl group, a 2-ethylhexyloxyethyl group, a γ-methoxypropyl group, a γ-isopropoxypropyl group and a γ-2-ethylhexyloxypropyl group; phenoxy-substituted lower alkyl groups such as a phenoxyethyl group and a γ-phenoxypropyl group; aralkyl groups such as a benzyl group and a phenethyl group; halogen-substituted lower alkyl groups such as a chloroethyl group and a bromoethyl group; alkoxycarbonyl-substituted lower alkyl groups such as a methoxycarbonylmethyl group, an ethyoxycarbonylethyl group and a butoxycarbonylethyl group; cyanoalkyl groups such as a cyanoethyl group; and a tetrahydrofurfuryl group. Preferred examples of the substituted or unsubstituted aryl group represented by $R^1$, $R^2$ and $R^3$ include a phenyl group, a chlorophenyl group, a methylphenyl group, a butylphenyl group, a methoxyphenyl group, a butoxyphenyl group and an acetylaminophenyl group.

Also, (A) in the above general formula (I) preferably represents a substituted or unsubstituted alkylene group, for example,

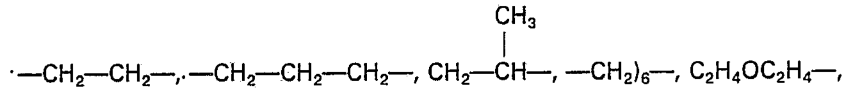

more preferably an ethylene group or a propylene group or may represent a phenylene group, a methylphenylene group, a chlorophenylene group or

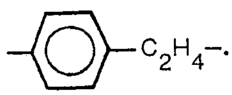

X in general formula (I) preferably represents a fluorine atom.

As stated Y in general formula (I) represents $—NR^4R^5$ or $—OR^6$ and $R^4$, $R^5$ and $^6$ represent a hydrogen atom; a substituted or unsubstituted alkyl group; an alkenyl group such as an allyl group or a crotyl group; a cyclohexyl group; an aryl group such as a phenyl group; or an aralkyl group such as a benzyl group or a phenethyl group; or $—NR^4R^5$ may together form a 5-membered or 6-membered nitrogen-containing heterocyclic ring.

The substituted or unsubstituted alkyl groups represented by $R^4$, $R^5$ and $R^6$ include the alkyl groups and the substituted alkyl groups described above with respect to $R^1$, $R^2$ and $R^3$.

The 5-membered or 6-membered nitrogen-containing heterocyclic rings formed by bonding $R^4$ and $R^5$ include a 1-pyrrolidinyl group, a 3-methyl-1-pyrrolidinyl group, a 2,5-dimethyl-1-pyrrolidinyl group, a 3-thiazolidinyl group, a 1-pyrrolyl group, a 1-pyrazolyl group, a 1-imidazolyl group, a morpholino group, a piperidino group, a 2,6-dimethylpiperidino group, a 1-piperadinyl group and a 4-methyl-1-piperadinyl group.

It is particularly preferred that $—NR^4R^5$ is a dialkylamino group having 4 to 12 carbon atoms such as a N,N-diethylamine or a N,N-dibutylamine groups, or a monoalkylamino group having 4 to 12 carbon atoms, such as a γ-isopropoxy-propylamine, an N-butylamine or a 2-ethylhexylamine group.

Z in general formula (I) represents a metal such as sodium or potassium, or an amine base represented by the following general formula (II):

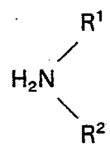

[II]

wherein $R^1$ and $R^2$ are as defined above with respect to general formula (I).

More preferred reactive phthalocyanine dyes of the present invention include those represented by the following general formula (I-1):

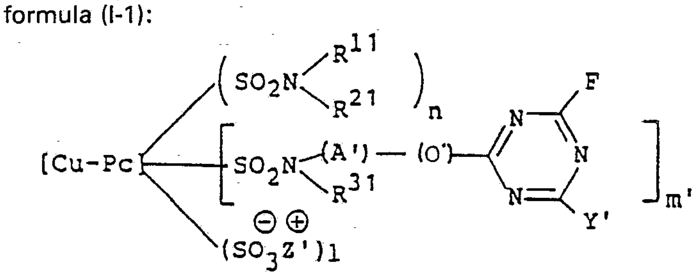

(I-1)

wherein [Cu-Pc] represents a copper phthalocyanine residue; $R^{11}$, $R^{21}$, $R^{31}$ each represents a hydrogen atom or a substituted or unsubstituted alkyl group; (A') represents an alkylene group or $—R^{71}—O—R^{81}—$ (wherein $R^{71}$ and $R^{81}$ each reprsents a lower alkylene group); Y' represents $—NR^{41}R^{51}$ (wherein $R^{41}$ and $R^{51}$ each represents a hydrogen atom, a substituted or unsubstituted alkyl group, an alkenyl group, a cyclohexyl group, an aryl group, an aralkyl group or wherein $—NR^{41}R^{51}$ together represents a 5-membered nitrogen-containing heterocyclic ring formed by bonding $R^{41}$ and $R^{51}$); Z' represents an alkali metal atom or alkyl ammonium salt; and m' represents a real number of 1 to 2.

The most preferred reactive phthalocyanine dyes of the present invention are those represented by the following general formula (I-2):

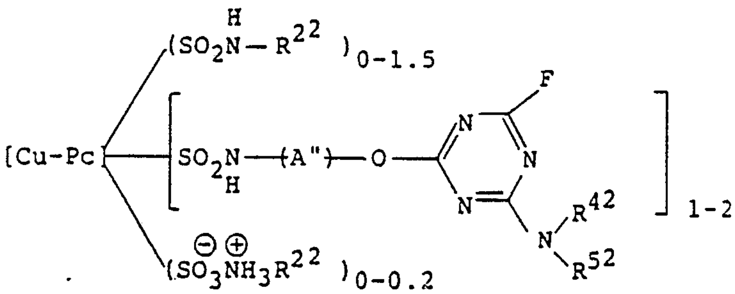

(I-2)

wherein [Cu-Pc] represents a copper phthalocyanine residue; $R^{22}$ represents a substituted or unsubstituted alkyl group; (A'') represents an alkylene group; and $R^{42}$ and $R^{52}$ each represents a hydrogen atom or a substituted or unsubstituted alkyl group. Of these reactive phthalocyanine dyes those represented by the following general formula (I-3) are particularly preferred:

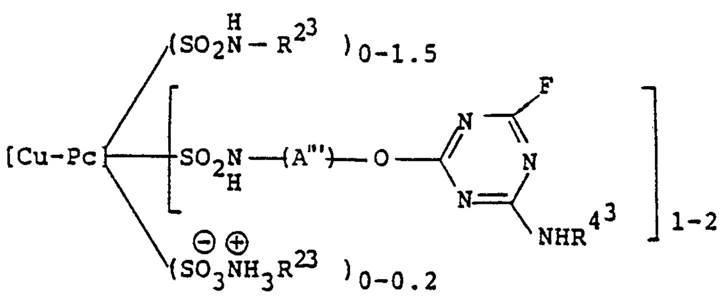

(I-3)

wherein [Cu-Pc] represents a copper phthalocyanine residue; $R^{23}$ represents a lower alkyl group of a lower alkyl group substituted by a hydroxyl group or a lower alkoxy group; A''' represents an alkylene group, having from 2 to 4 carbon atoms and $R^{43}$ represents a lower alkyl group or a lower alkyl group substituted by a lower alkoxy group.

The reactive phthalocyanine dyes of the general formula (I) are produced by reacting an acid chloride represented by the following general formula (III):

$$[Pc]—(SO_2Cl)q \qquad (III)$$

(wherein [Pc] is as defined above and q is a real number of 1 to 4) with an amine represented by the following general formula (IV):

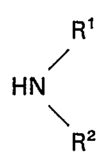

(I)

(wherein $R^1$ and $R^2$ are as defined above) and a substituted amine represented by the following general formula (V):

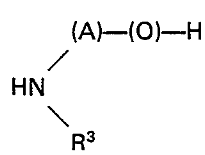

(V)

(wherein $R^3$ and (A) are as defined above) in succession or simultaneously in an aqueous solvent or an organic solvent such as acetone or N-methylpyrrolidone, in the presence of an acid scavenger such as triethylamine or sodium carbonate, for 2 to 24 hours at a temperature of from 0°C to 30°C to produce a compound represented by the following general formula (VI):

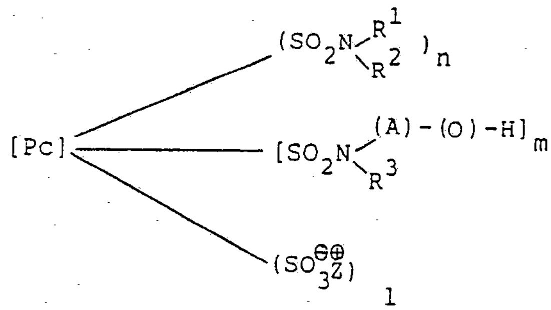

[VI]

(wherein [Pc], $R^1$, $R^2$, $R^3$, (A), X, Z, l, m, and n are as defined above; subjecting the compound of the general formula (VI) thus obtained to a dihalogenocyanuration reaction in a solvent such as N-methylpyrrolidone, in the presence of an acid scavenger such as triethylamine or sodium carbonate, at a temperature of from −5°C to 10°C to produce a compound represented by the following general formula (VII):

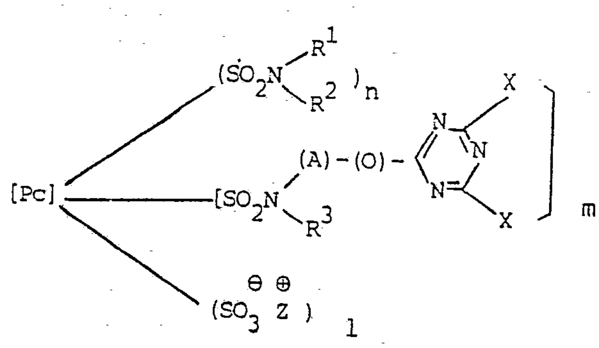

(VII)

(wherein [Pc], $R^1$, $R^2$, $R^3$, (A), X, Z, l, m and n are as defined above); and then reacting the compound of general formula (VII) thus produced with an alcohol or an amine represented by the following general formula (VIII):

YH (VIII)

(wherein Y is as defined above) in a solvent such as N-methylpyrrolidone, or acetone in the presence of an acid scavenger such as triethylamine or sodium carbonate for 2 to 10 hours at a temperature of from −5°C to 10°C.

As fibers which are dyeable by the dyes of this invention, there may be cited cellulose (e.g., cotton), hemp, viscous rayon, copper ammonia rayon, partially aminated or partially amylated cellulose fibers, polyester fibers, polyamide fibers, nylon fibers, wool, polyurethane fibers, diacetate fibers and triacetate fibers, as well as the cloths, mixed yarn cloths, mixed yarn fabrics and woven or knitted goods made therefrom (hereinafter, these cloths and fabrics are included in the term "fibers"). The dyes of this invention are particularly effective for cellulose fibers and the mixed fibers of cellulose and polyester.

In the practice of dyeing, it is preferred to disperse the dye of the above general formula (I) in the medium in the form of fine particles having a size of from 0.5 to 2 microns. As dispersion methods, any of the following may be used:

(a) finely dispersing the dye in water by means of a grinder such as a sand grinder or a mill, using a nonionic surface active agent such as a Pluronic-type surface active agent or an anionic surface active agent;

(b) finely dispersing the dye in a solvent or solvent mixture other than water (e.g., an alcohol such as ethyl alcohol, isopropyl alcohol or polyethylene glycol, a ketone and as acetone or methyl ethyl ketone, a hydrocarbon such a n-hexane, toluene, xylene or a mineral turpentine, a halogenated hydrocarbon such as tetrachloro-ethylene, an ester such as ethyl acetate or butyl acetate, or an ether such as dioxane or tetraethylene glycol dimethyl ether) using a water sparingly soluble or water-insoluble dispersion agent such as a sulfosuccinic acid ester and an addition product of nonylphenol, and a low molar amount of ethylene oxide, and

(c) finely dispersing the dye in a mixture of water and a water-miscible solvent in one of the above-described solvents.

Furthermore, in the above-described fine dispersion step, a high molecular weight compound soluble in the dispersion medium or a surface active agent, mainly having a function other than dispersion, may be added to the dispersion system.

The fine dispersion of the dye of the invention can be used as a dye bath for a dip dyeing method or a padding dyeing method or, as it is, as a colouring paste for a printing dye.

In general, the fine dispersion of the dye of this invention prepared as described above is diluted with water, an aqueous solution of an organic solvent or an emulsion of, for example, a hydrocarbon, a halogenated hydrocarbon, and water in a desired concentration of the dye; and the diluted dispersion is used as a dip dyeing bath, a padding dyeing bath or a printing color paste.

In the preparation of the dip dyeing bath, the padding dyeing bath or the printing color paste, an alkali metal compound or an alkali precursor capable of forming an alkali metal when heated in the presence of water may be added to the dispersion of an acid binding agent.

The acid binding agent is usually used in such an amount that the pH of the dip dyeing bath, padding dyeing bath or the printing color paste is from 7.5 to 9.0.

Also, in the case of dyeing fiber containing cellulose in a dye bath or with a color paste containing the dye of this invention, it is preferred that a cellulose fiber-swelling agent is present in the dye bath or the color paste.

Any cellulose fiber-swelling agent having a boiling point of higher than 150°C and an effect of swelling cellulose fiber can be used as the aforesaid swelling agent and examples thereof are a urea such as N,N,N',N'-tetramethylurea, a polyhydric alcohol such as polyethylene glycol or polypropylene glycol, and derivatives thereof. Particularly preferred are derivatives of polyhydric alcohols such a polyethylene glycol and polypropylene glycol which do not react with the reactive groups of the dyes and which have an average molecular weight between about 200 and 500 and have their terminal hydroxyl groups dimethylated or monomethylated.

The amount of the cellulose fiber-swelling agent is generally about from 5 to 25% by weight, preferably about from 8 to 15% by weight, based one the amount of the padding dyeing bath or the printing color paste.

The above-described mixed fibers may be dyed by the reactive phthalocyanine dye of the general above formula (I) in a conventional manner. For example, the mixed fibers are dipped in a dye bath prepared by the method described above or are printed with the color paste prepared as described above, and after drying, are heat-treated, and then washed with hot water containing a surface active agent.

By dyeing the various fibers described above using the dyes of this invention, Turkish blue fibers which are clearly and uniformly dyed and have good fastness in various respects, in particular good color fastness to light and good color fastness to washing, can be otained. Moreover, the Turkish blue fibers thus obtained also exhibit good color fastness to dry cleaning.

The following Examples are intended to illustrate the present invention but not to limit in any way.

Example 1

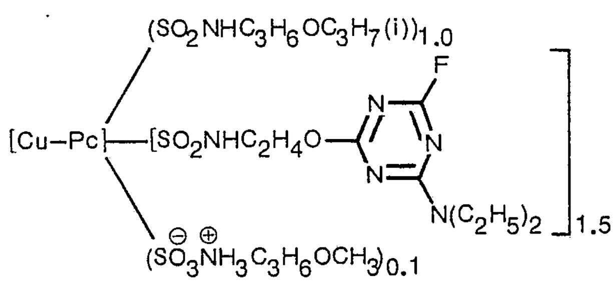

[IX]

An aqueous dye composition was prepared by finely dispersing 10 parts (by weight) of the reactive copper phthalocyanine series dye of this invention represented by above formula (IX), 3 parts of lignin sulfonic acid salts, 4 parts of polyoxyethylene glycol nonylphenyl ether (HLB 13.3), 5 parts of ethylene glycol, 0.1 part of a silicon series defoaming agent, and 77.9 parts of water using a paint shaker as fine dispersion means.

A printing colour paste (pH 8.5) having the following composition was prepared using the dye composition thus obtained:

| | |
|---|---|
| Dye composition | 6.5 g |
| Aqueous 5% sodium aliginate solution | 55.0 g |
| Polyethylene glycol dimethyl ether having mean molecular weight of 400 | 9.0 g |
| Water | Remainder |
| Total | 100.0 g |

A mixed fiber spun cloth of polyester and cotton (mixing ratio of 65/35) was printed with the printing color paste using a screen printing machine and after temporarily drying for 3 minutes at 80°C, the printed dye was fixed by high-temperature steaming for 5 minutes at 190°C. Then, after washng with water, the cloth thus printed was subjected to soaping for 20 minutes at 80°C using a washing solution containing 2 g/l of a nonionic surface active agent (Scoarole M.900, registered trade mark, made by Kao Corporation) at a bath ratio of 1:30 to provide a Turkish blue dyed product excellent in color fastness to light, color fastness to washing and color fastness to dry cleaning.

The dye used in this Example was prepared by the following method.

20 g of copper phthalocyanine substituted by, on an average, 2.5 molecules of sulfonic acid chloride were dissolved in 250 ml of N-methylpyrrolidone and after adding 3.0 g of ethanolamine and 10.0 g of triethylamine to the solution thus obtained, the reactants were reacted for 2 hours at room temperature and then, after further adding thereto 3.3 g of γ-isopropoxypropylamine, the reaction was continued for 2 hours at the same temperature as above. Thereafter, the reaction mixture thus obtained was cooled to −5°C and 6.6 g of trifluorotriazine and then 9.7 g of triethylamine were added to the reaction mixture. Then, after further adding thereto 3.5 g of diethylamine and continuing the reaction for 2 hours at 0°C to 5°C, the reaction mixture obtained was poured in 100 ml of ice-water. Precipitates thus deposited were collected by filtration and washed with water to provide 26.3 g (yeld of 90%) of the dye shown by formula (IX) above.

λmax (DMF) of the dye thus obtained was 670 nm.

## Example 2

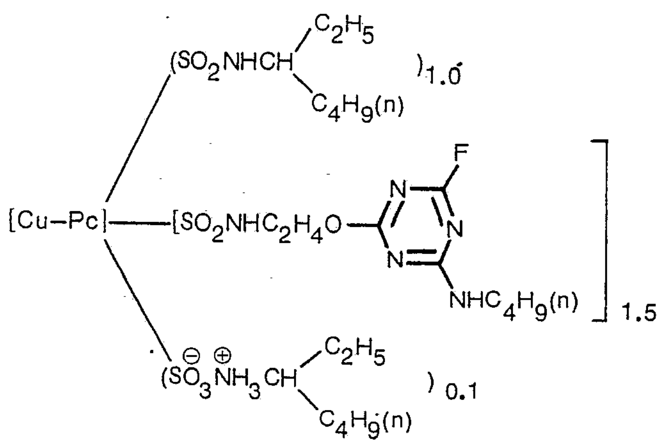

A dye composition composed of 15 parts of the reactive copper phthalocyanine dye of this invention represented by the above structural formula, 10 parts of a Pluronic type surface active agent (Pluronic L64, registered trade name, made by Asahi Denka Kogyo K.K.), and 75 parts of water was finely dispersed using a sand grinder as a fine dispersion means to provide a dye dispersion.

A printing color paste (pH 8.0) having the following composition was prepared using the dye dispersion thus obtained:

| | |
|---|---|
| Dye dispersion | 10 g |
| Aqueous 5% sodium alginate solution | 55 g |
| $CH_3O(C_2H_4O)_6H$ | 12 g |
| Water | 23 g |
| Total | 100 g |

A cotton broad cloth (40 cotton count) was printed with the printing color paste thus prepared using a screen printing machine, temporarily dried for 3 minutes at 80°C, and thereafter treated with super heated steam for 7 minutes at 185°C.

Then, the dyed cloth was washed in the same manner as described in Example 1 to provide a Turkish blue dyed product excellent in color fastness to light and color fastness to washing.

The dye used in this Example was prepared according to a similar method to that described in Example 1 and λmax (DMF) of the dye was 670 nm.

Example 3

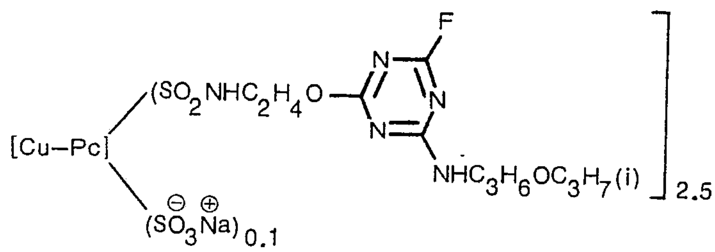

An aqueous dye composition was prepared by finely dispersing 10 parts of a copper phthalocyanine dye represented by the above-described structural formula, parts of a naphthalenesulfonic acid-formaldehyde condensation product, 4 parts of polyoxyethylene glycol nonylphenyl ether (HLB 13.3), 5 parts of ethylene glycol, 0.1 part of a silicon series defoaming agent and 77.9 parts of water, using a sand grinder.

A padding bath (pH 8.5) having the following composition was prepared using the dye composition thus prepared:

| | | |
|---|---|---|
| Dye composition | | 6 g |
| $CH_3O(C_2H_4O)_{12}H$ | | 10 g |
| Water | | Remainder |
| | Total | 100 g |

A mixed fiber spun cloth of polyester and cotton (mixing ratio of 65.35) was impregnated with the padding bath, after squeezing to a squeezing rate of 45%, the cloth was dried for 2 minutes at 100°C, and then fixing of the dye was performed with dry air for one minute at 200°C.

Then, the cloth was washed according to the method described in Example 1 to provide a Turkish blue dyed product excellent in color fastness to light and color fastness to washing.

The dye used in this Example was prepared by the following method.

20 g of copper phthalocyanine substituted by, on an average, 2.5 molecules of sulfonic acid chloride was dispersed in 400 g of ice-water and after adding thereto 11.4 g of ethanolamine and 6.0 g of sodium acetate, the reactants were reacted for 5 hours at 0°C to 5°C and then for 15 hours at room temperature. The reaction mixture thus obtained was heated to 55°C to 60°C for one hour and then filtered at the same temperature. The reaction mixture was washed well with hot water containing 0.5 sodium carbonate and then dried to provide 13.0 g (yield 60%) of the dye having following structural formula (X):

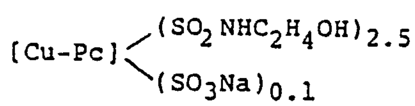 (X)

Then 13.0 g of the well-dried dye of the aforesaid structural formula (X) were dissolved in 130 ml of N-methylpyrrolidone and after cooling the solution to −5°C, 6.0 g of trifluorotriazine and then 9.0 g of triethylamine. Then, after further additing 5.7 g of γ-isopropoxypropylamine to the mixture, the reactants were reacted for 2 hours at 0°C to 5°C and, thereafter, the reaction mixture thus obtained was poured in 100 ml of ice-water. Precipitates thus deposited were collected by filtration and washed well with water to provide 20.8 g (yield 90%) of the desired dye.

λmax (DMF) of the dye was 670 nm.

Example 4

The phthalocyanine series dyes described in Table 1 below were prepared according to methods similar to that described in Example 1 and aqueous dye compositions were prepared using the dyes thus

obtained according to the method described in Example 1. Then, mixed fiber spun cloths of polyester and cotton (mixing ratio of 65/35) were printed using the dye compositions by the method described in Example 1. Thus, Turkish blue dye products excellent in color fastness to light and color fastness to washing were obtained in all cases.

The dyes used in this Example are shown in Table 1.

Table

| No. | [Pc] | $-R^1$ | $-R^2$ | $-R^3$ | $-(A)-$ | $-X$ | $-Y$ | $Z^{\oplus}$ | n | m | ℓ | Hue of Dyed Cloth | λmax (DMF) nm |
|---|---|---|---|---|---|---|---|---|---|---|---|---|---|
| 1 | copper-phthalo-cyanine residue | -H | $-C_3H_6OCH_3$ | -H | $-C_2H_4-$ | -F | $-N(C_2H_5)_2$ | $\overset{\oplus}{N}H_3C_3H_6OCH_3$ | 1.0 | 1.5 | 0.1 | Turkish blue | 670 |
| 2 | " | " | $-C_3H_6OC_3H_7(i)$ | " | " | " | " | $\overset{\oplus}{N}H_3C_3H_6OC_3H_7(i)$ | " | " | " | " | " |
| 3 | " | " | 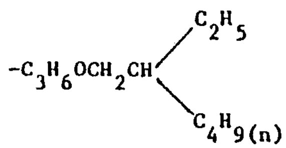 | " | " | " | " | 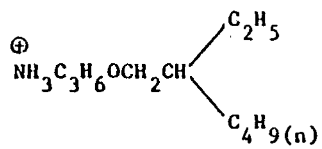 | " | " | " | " | " |
| 4 | " | " | $-C_4H_9(n)$ | " | " | " | " | $\overset{\oplus}{N}H_3C_4H_9(n)$ | " | " | " | " | " |
| 5 | " | " | $-C_2H_5$ | " | " | " | " | $\overset{\oplus}{N}H_3C_2H_5$ | " | " | " | " | " |
| 6 | " | " | 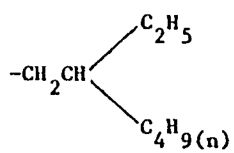 | " | " | " | " | 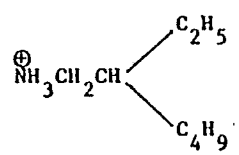 | " | " | " | " | " |
| 7 | " | " | $-C_8H_{17}(n)$ | " | " | " | 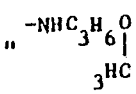 | $\overset{\oplus}{N}H_3C_8H_{17}(n)$ | " | " | " | " | " |
| 8 | " | " | $-C_2H_4OCH_3$ | " | " | " | " | $\overset{\oplus}{N}H_3C_2H_4OCH_3$ | " | " | " | " | " |
| 9 | " | " | 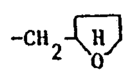 | " | " | " | " | 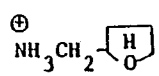 | " | " | " | " | " |
| 10 | " | " | 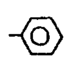 | " | " | " | " | 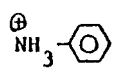 | " | " | " | " | " |

Table (cont'd)

| No. | [Pc] | $-R^1$ | $-R^2$ | $-R^3$ | $-(A)-$ | $-X$ | $-Y$ | $Z^{\oplus}$ | n | m | ℓ | Hue of Dyed Cloth | λmax (DMF) nm |
|---|---|---|---|---|---|---|---|---|---|---|---|---|---|
| 11 | copper-phthalocyanine residue | $-H$ | 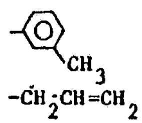 | $-H$ | $-C_2H_4-$ | $-F$ | $-NHC_2H_4OCH_3$ | $Na^{\oplus}$ | 1.0 | 1.5 | 0.1 | Turkish blue | 670 |
| 12 | " | " | $-CH_2CH=CH_2$ | " | " | " | " | $\overset{\oplus}{N}H_3CH_2-CH=CH_2$ | " | " | " | " | " |
| 13 | " | " | 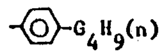 | " | " | " | $-OCH_3$ | $Na^{\oplus}$ | " | " | " | " | " |
| 14 | " | " | 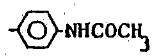 | " | " | " | " | $Na^{\oplus}$ | " | " | " | " | " |
| 15 | " | " | 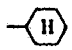 | " | " | " | $-NHC_3H_6OC_3H_7(i)$ | 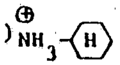 | " | " | " | " | " |
| 16 | " | " | $-C_2H_4Br$ | " | " | " | " | $\overset{\oplus}{N}H_3C_2H_4Br$ | " | " | " | " | " |
| 17 | " | " | 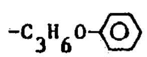 | " | " | " | " | 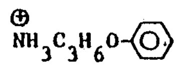 | " | " | " | " | " |
| 18 | " | " | 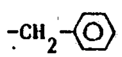 | " | " | " | " | 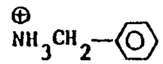 | " | " | " | " | " |
| 19 | " | " | 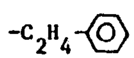 | " | " | " | $-N(C_4H_9)_2$ | 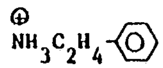 | " | " | " | " | " |
| 20 | " | " | $-CH_2COOCH_3$ | " | " | " | " | $Na^{\oplus}$ | " | " | " | " | " |
| 21 | " | – | – | " | " | " | $-N(C_2H_5)_2$ | – | 0 | 2.5 | 0 | " | " |
| 22 | " | – | – | " | " | " | $-NHC_3H_7(n)$ | – | " | " | " | " | " |
| 23 | " | – | – | " | " | " | $-N(C_4H_9)_2$ | – | " | " | " | " | " |
| 24 | " | – | – | " | " | " | $-NHC_2H_4OCH_3$ | – | " | " | " | " | " |
| 25 | " | – | – | " | " | " | $-NHC_3H_6OCH_3$ | $\overset{\oplus}{N}H_3C_2H_4OH$ | " | " | 0.1 | " | " |

Table (cont'd)

| No. | [Pc] | $-R^1$ | $-R^2$ | $-R^3$ | -(A)- | -X | -Y | $Z^{\oplus}$ | n | m | ℓ | Hue of Dyed Cloth | λmax (DMF) nm |
|---|---|---|---|---|---|---|---|---|---|---|---|---|---|
| 26 | copper-phthalo-cyanine residue | – | – | -H | $-C_3H_6-$ | -F | $-NHC_3H_6OC_3H_7(i)$ | – | 0 | 2.5 | 0 | Turkish blue | 670 |
| 27 | " | – | – | " | " | " | $-NHC_6H_{13}(n)$ | – | " | " | " | " | " |
| 28 | " | – | – | " | " | " | $-NH-CH_2-$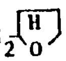 | – | " | " | " | " | " |
| 29 | " | – | – | " | " | " | - 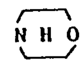 | – | " | " | " | " | " |
| 30 | " | – | – | " | " | " | $-NHCH_2-$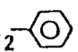 | – | " | " | " | " | " |
| 31 | " | – | – | " | " | " | $-N(C_2H_5)_2$ | – | " | " | " | " | " |
| 32 | " | – | – | | $-C_2H_4O$<br>$-{}_4H_2C$ | " | " | – | " | " | " | " | " |
| 33 | " | – | – | " | " | " | $-NHC_4H_9(n)$ | – | " | " | " | " | " |
| 34 | " | – | – | " | $-C_3H_6-$ | " | $-NHC_8H_{17}(i)$ | $\overset{\oplus}{N}H_3C_3H_6OH$ | " | 3.0 | 0.2 | " | " |
| 35 | " | – | – | " | 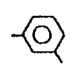 | " | $-N(C_4H_9)_2$ | $\overset{\oplus}{N}H_3C_3H_6OH$ | " | " | " | " | " |
| 36 | " | – | – | " | $CH_3$<br>$-CH_2-CH-$ | " | " | – | " | " | 0 | " | " |
| 37 | " | – | – | " | " | " | $-N(C_2H_5)_2$ | – | " | 2.5 | " | " | " |

Table (cont'd)

| No. | [Pc] | $-R^1$ | $-R^2$ | $-R^3$ | -(A)- | -X | -Y | $Z^{\oplus}$ | n | m | ℓ | Hue of Dyed Cloth | λmax (DMF) nm |
|---|---|---|---|---|---|---|---|---|---|---|---|---|---|
| 38 | nickel-phthalo-cyanine residue | $-C_2H_5$ | $-C_2H_5$ | $-C_2H_5$ | $-C_2H_4-$ | -Cℓ | $-N(C_2H_5)_2$ | $\overset{\oplus}{N}H_2(C_2H_5)_2$ | 1.0 | 1.5 | 0.1 | Turkish blue | 670 |
| 39 | " | -H | $-C_2H_4CN$ | " | " | " | " | $\overset{\oplus}{N}H_3C_2H_4CN$ | " | " | " | " | " |
| 40 | " | $-C_4H_9$ | $-C_4H_9$ | " | " | " | " | $\overset{\oplus}{N}H_2(C_4H_9(n))_2$ | " | " | " | " | " |
| 41 | " | -H | $-C_3H_6-$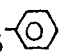 | -H | $-C_3H_6-$ | " | " | $\overset{\oplus}{N}H_3C_3H_6-$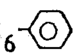 | " | " | " | " | " |
| 42 | " | -H | $-C_3H_6OCH_3$ | -H | $-C_2H_4-$ | -F | $-N(C_2H_5)_2$ | $\overset{\oplus}{N}H_3C_3H_6OCH_3$ | 1 | 1.5 | 0.1 | " | 667 |
| 43 | " | " | $-C_3H_6OC_3H_7(i)$ | " | " | " | $-NHC_3H_6OCH_3$ | $\overset{\oplus}{N}H_3C_3H_6OC_3H_7(i)$ | " | " | " | " | " |
| 44 | " | " | $-C_4H_9(n)$ | " | " | " | " | $\overset{\oplus}{N}H_3C_4H_9(n)$ | " | " | " | " | " |
| 45 | " | " | -H | " | $-C_3H_6-$ | -Cℓ | -NH-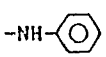 | $\overset{\oplus}{N}H_4$ | " | 2 | " | " | " |
| 46 | " | " | $-C_2H_4-$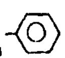 | " | " | -F | $-NHC_4H_9(n)$ | $\overset{\oplus}{N}H_3C_2H_4-$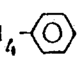 | " | " | " | " | " |
| 47 | " | $-C_2H_5$ | $-C_2H_5$ | $-C_2H_5$ | $-C_2H_4O$<br>$-_4H_2C$ | " | $-NHC_2H_4OCH_3$ | $\overset{\oplus}{N}H_2(C_2H_5)_2$ | " | " | " | " | " |
| 48 | " | – | – | " | " | " | $-NHC_3H_6OCH_3H_7(i)$ | – | 0 | 2.5 | 0 | " | " |
| 49 | " | – | – | -H | $-CH_2\overset{CH_3}{CH}-$ | " | $-N(C_4H_9)_2$ | – | " | " | " | " | " |
| 50 | " | – | – | " | $-C_2H_4-$ | " | $-N{<}^{H}_{C_6H_{13}}$ | – | " | " | " | " | " |

**Claims**

1. A reactive phthalocyanine dye characterised by the following general formula (I):

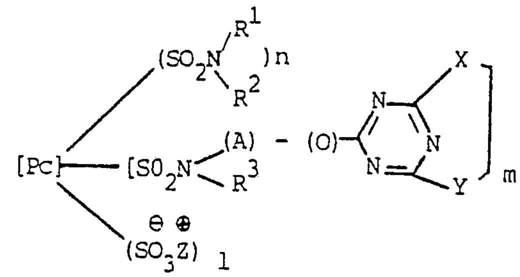

[I]

wherein [Pc] represents a copper phthalocyanine residue of a nickel phthalocyanine residue: $R^1$, $R^2$ and $R^3$ each represents a hydrogen atom, a substituted or unsubstituted alkyl group, a cyclohexyl group, an allyl group or a substituted or unsubstituted aryl group; (A) represents a substituted or unsubstituted alkylene group, a substituted or unsubstituted arylene group, an aralkylene group or —$R^7$—O—$R^8$— (wherein $R^7$ and $R^8$ each represents an alkylene group); X represents a fluorine atom or a chlorine. atom; Y represents —$NR^4R^5$ (wherein $R^4$ and $R^5$ each represents a hydrogen atom, a substituted or unsubstituted alkyl group, an alkenyl group, a cyclohexyl group, an aryl group, an aralkyl group or wherein —$NR^4R^5$ together represents a 5-membered or 6-membered nitrogen-containing heterocyclic ring formed by bonding $R^4$ and $R^5$) or —$OR^6$ (wherein $R^6$ represents a hydrogen atom, a substituted or unsubstituted alkyl group, an alkenyl group, a cyclohexyl group, an aryl group or an aralkyl group); Z represents a metal atom or an amine base: l represents a real number of 0 to 0.2; m represents a real number of 1 to 4; and n represents a real number of 0 to 2.

2. A dye as claimed in claim 1, wherein $R^1$, $R^2$ and $R^3$ each represents a substituted or unsubstituted alkyl group having from 1 to 10 carbon atoms or a substituted or unsubstituted aryl group having from 6 to 8 carbon atoms.

3. A dye as claimed in claim 1 or 2, wherein A represents a substituted or unsubstituted alkylene group having from 2 to 4 carbon atoms, a substituted or unsubstituted arylene group having 6 carbon atoms, an aralkylene group having 7 or 8 carbon atoms or an alkylene group having 2 or 3 carbon atoms.

4. A dye as claimed in claim 1, 2 or 3, wherein $R^4$ and $R^5$ represent a substituted or unsubstituted alkyl group having from 1 to 10 carbon atoms, $R^6$ represents a substituted or unsubstituted alkyl group having from 1 to 6 carbon atoms, and $R^4$, $R^5$ and $R^6$ represent an alkenyl group having from 3 to 5 carbon atoms, an aryl group having from 6 to 8 carbon atoms, and an aralkyl group having from 7 to 10 carbon atoms.

5. A dye as claimed in claim 1, 2 or 3, wherein said 5- or 6-membered nitrogen-containing hetero-cyclic ring is a 1-pyrrolidinyl group, a 3-methyl-1-pyrrolidinyl group, a 2-hydroxyethyl-1-pyrrolidinyl group, a 2,5-dimethyl-1-pyrrolidinyl group, a 3-thiazolidinyl group, a 1-pyrrolyl group, a 1-imidazolyl group, a morpholino group, a piperidino group, a 2,6-dimethylpiperidino group, a 1-piperadinyl group or a 4-methyl-1-piperadinyl group.

6. A dye as claimed in any preceding claim, wherein said amine base is represented by the following general formula (II):

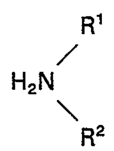

(II)

wherein $R^1$ and $R^2$ are as defined with respect to general formula (I).

7. A dye as claimed in claim 1, and having the following general formula (I-1):

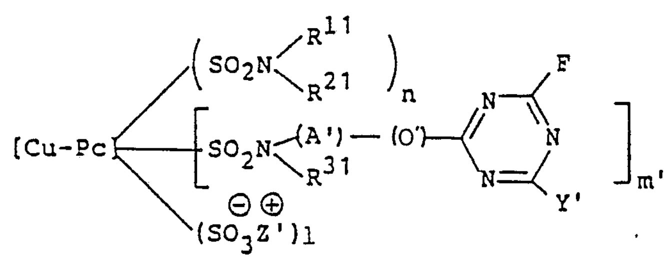

(I-1)

wherein [Cu-Pc] represents a copper phthalocyanine residue; $R^{11}$, $R^{21}$, $R^{31}$ each represents a hydrogen atom

or a substituted or unsubstituted alkyl group; (A') represents an alkylene group or —$R^{71}$—O—$R^{81}$— (wherein $R^{71}$ and $R^{81}$ each represents a lower alkylene group); Y' represents —$NR^{41}R^{51}$ (wherein $R^{41}$ and $R^{51}$ each represents a hydrogen atom, a substituted or unsubstituted alkyl group, an alkenyl group, a cyclohexyl group, an aryl group, an aralkyl group or wherein —$NR^{41}R^{51}$ together represents a 5-membered nitrogen-containing heterocyclic ring formed by bonding $R^{41}$ and $R^{51}$, Z' represents an alkali metal atom or alkyl ammonium salt; and m' represents a real number of 1 to 2.

8. A dye as claimed in claim 1 and having the following general formula (I-2):

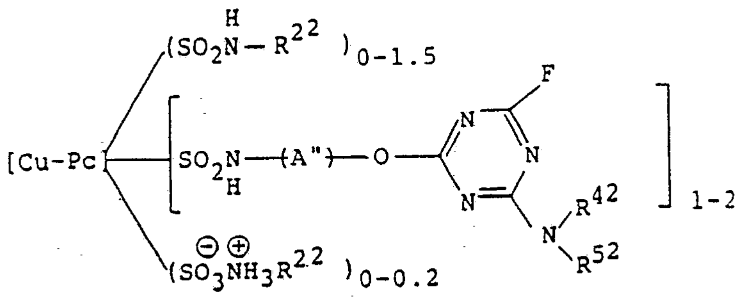

(I-2)

wherein [Cu-Pc] represents a copper phthalocyanine residue; $R^{22}$ represents a substituted or unsubstituted alkyl group; (A'') represents an alkylene group; and $R^{42}$ and $R^{52}$ each represents a hydrogen atom or a substituted or unsubstituted alkyl group.

9. A dye as claimed in claim 1 and having the following general formula (I-3):

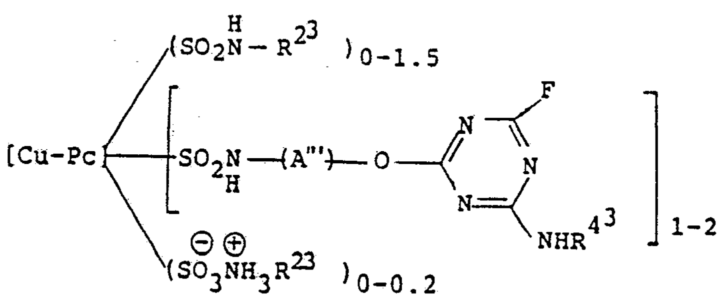

(I-3)

wherein [Cu-Pc] represents a copper phthalocyanine residue; $R^{23}$ represents a lower alkyl group or a lower alkyl group substituted by a hydroxyl group or a lower alkoxy group; A''' represents a group having from 2 to 4 carbon atoms; and $R^{43}$ represents a lower alkyl group or a lower alkyl group substituted by a lower alkoxy group.

10. A process of producing a reactive phthalocyanine dye represented by the general formula (I) as set forth and defined in Claim 1 which comprises reacting an acid chloride represented by the following formula (III):

$$[Pc]\ (SO_2Cl)_q \qquad \text{(III)}$$

(wherein [Pc] is as defined above and q is a real number of 1 to 4) with an amine represented by the following general formula (IV):

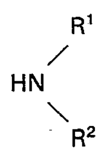

(IV)

(wherein $R^1$ and $R^2$ are as defined above) and a substituted amine represented by the following general formula (V):

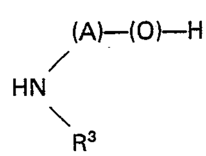

(V)

(wherein $R^3$ and (A) are as defined above) in succession or simultaneously in an aqueous solvent or an

organic solvent, in the presence of an acid scavenger, for 2 to 24 hours at a temperature of from 0°C to 30°C to produce a compound represented by the following general formula (VI):

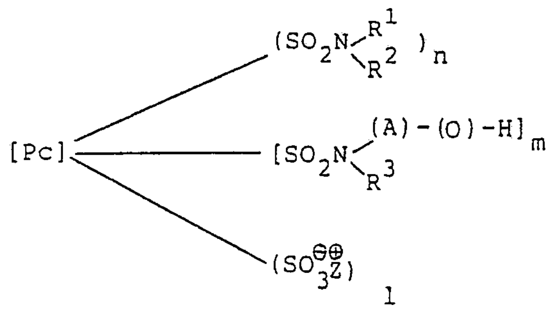

[VI]

(wherein [Pc], $R^1$, $R^2$, $R^3$, (A), X, Z, l, m, and n are as defined above); subjecting the compound of the general formula (VI) thus obtained to a dihalogenocyanuration reaction in a solvent, in the presence of an acid scavenger, at a temperature of from −5°C to 10°C to produce a compound represented by the following general formula (VII):

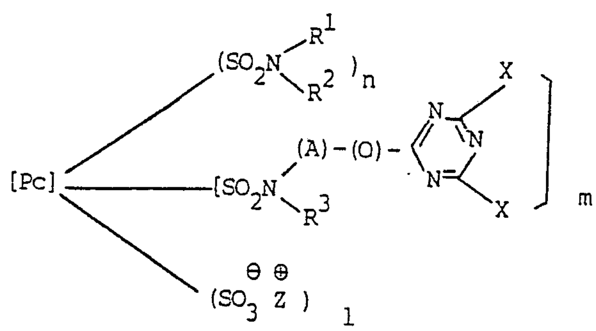

(VII)

(wherein [Pc], $R^1$, $R^2$, $R^3$, (A), X, Z, l, m, and n are as defined above); and then reacting the compound of general formula (VII) thus produced with an alcohol or an amine represented by the following general formula (VIII):

YH (VIII)

(wherein Y is as defined above) in a solvent, in the presence of an acid scavenger for 2 to 10 hours at a temperature of from −5°C to 10°C.

**Patentansprüche**

1. Phthalocyanin-Reaktivfarbstoff, gekennzeichnet durch folgende allgemeine Formel I:

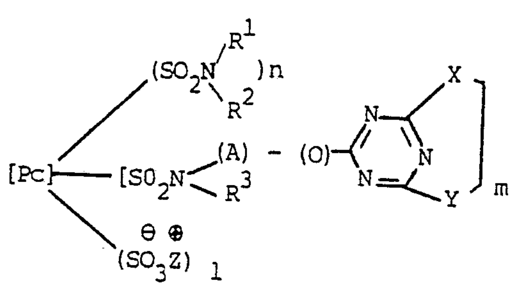

[I]

worin [Pc] einen Kupfer-phthalocyanin-Rest oder einen Nickelphthalocyanin-Rest darstellt; $R^1$, $R^2$ und $R^3$ je ein Wasserstoffatom, eine substituierte oder unsubstituierte Alkylgruppe, eine Cycloalkylgruppe, eine Allylgruppe oder eine substituierte oder unsubstituierte Arylgruppe darstellen; (A) eine substituierte oder unsubstituierte Alkylengruppe, eine substituierte oder unsubstituierte Arylengruppe, eine Aralkylengruppe oder $—R^7—O—R^8—$ (worin $R^7$ und $R^8$ je eine Alkylengruppe darstellen) darstellt; X ein Fluoratom oder Chloratom darstellt; Y $—NR^4R^5$ (worin $R^4$ und $R^5$ je ein Wasserstoffatom, eine substituierte oder unsubstituierte Alkylgruppe, eine Alkenylgruppe, eine Cyclohexylgruppe, eine Arylgruppe, eine

Aralkylgruppe oder worin $—NR^4R^5$ zusammen einen fünfgliedrigen oder sechsgliedrigen Stickstoff enthaltenden, heterocyclischen Ring darstellen, der durch Verbindung von $R^4$ und $R^5$ gebildet ist oder $—OR^6$ (worin $R^6$ ein Wasserstoffatom, eine substituierte oder unsubstituierte Alkylgruppe, eine Alkenylgruppe, eine Cyclohexylgruppe, eine Arylgruppe oder eine Aralkylgruppe darstellt) darstellt; Z ein Metallatom oder eine Aminbase darstellt; l eine reelle Zahl von 0 bis 0,2 darstellt; m eine reelle Zahl von 1 bis 4 darstellt; und n eine reelle Zahl von 0 bis 2 darstellt.

2. Farbstoff gemäss Anspruch 1, worin $R^1$, $R^2$ und $R^3$ je eine substituierte oder unsubstituierte Alkylgruppe mit 1 bis 10 Kohlenstoffatomen oder eine substituierte oder unsubstituierte Arylgruppe mit 6 bis 8 Kohlenstoffatomen darstellen.

3. Farbstoff gemäss Anspruch 1 oder 2, worin A eine substituierte oder unsubstituierte Alkylengruppe mit 2 bis 4 Kohlenstoffatomen, eine substituierte oder unsubstituierte Arylengruppe mit 6 Kohlenstoffatomen, eine Aralkylengruppe mit 7 bis 8 Kohlenstoffatomen oder eine Alkylengruppe mit 2 bis 3 Kohlenstoffatomen darstellt.

4. Farbstoff gemäss Anspruch 1, 2 oder 3, worin $R^4$ und $R^5$ eine substituierte oder unsubstituierte Alkylgruppe mit 1 bis 10 Kohlenstoffatomen, $R^6$ eine substituierte oder unsubstituierte Alkylgruppe mit 1 bis 6 Kohlenstoffatomen darstellt und $R^4$, $R^5$ und $R^6$ eine Alkenylgruppe mit 3 bis 5 Kohlenstoffatomen, eine Arylgruppe mit 6 bis 8 Kohlenstoffatomen und eine Aralkylgruppe mit 7 bis 10 Kohlenstoffatomen darstellt.

5. Farbstoff gemäss Anspruch 1, 2 oder 3, worin der genannte fünf- oder sechsgliedrige Stickstoff enthaltende, heterocyclische Ring eine 1-Pyrrolidinylgruppe, eine 3-Methyl-1-pyrrolidinylgruppe, ein 2-Hydroxyethyl-1-pyrrolidinylgruppe, eine 2,5-Dimethyl-1-pyrrolidinylgruppe, eine 3-Thiazolidinylgruppe, eine 1-Pyrrolylgruppe, eine 1-Imidazolylgruppe, eine Morpholinogruppe, eine Piperidinogruppe, eine 2,6-Dimethylpiperidinogruppe, eine 1-Piperazinylgruppe oder 4-Methyl-1-piperazinylgruppe darstellt.

6. Farbstoff gemäss einem der vorhergehenden Ansprüche, worin die genannte Aminbase durch folgende allgemeine Formel II repräsentiert wird:

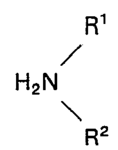

(II)

worin $R^1$ und $R^2$ wie in der allgemeinen Formel I definiert sind.

7. Farbstoff gemäss Anspruch 1 und welcher die folgende allgemeine Formel I-1 besitzt:

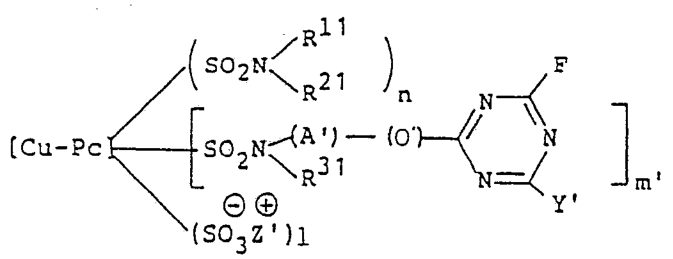

(I-1)

worin Cu-Pc einen Kupfer-phthalocyanin-Rest darstellt; $R^{11}$, $R^{21}$, $R^{31}$ je ein Wasserstoffatom oder eine substituierte oder unsubstituierte Alkylgruppe darstellen; (A′) eine Alkylengruppe oder $—R^{71}—O—R^{81}—$ (worin $R^{71}$ und $R^{81}$ je eine Niederalkylengruppe darstellen) darstellt; Y′ $—NR^{41}R^{51}$ (worin $R^{41}$ und $R^{51}$ je ein Wasserstoffatom, eine substituierte oder unsubstituierte Alkylgruppe, eine Alkenylgruppe, eine Cyclohexylgruppe, eine Arylgruppe, eine Aralkylgruppe oder worin $—NR^{41}R^{51}$ zusammen einen fünfgliedrigen, Stickstoff enthaltenden, heterocyclischen Ring darstellen, welcher durch Bindung von $R^{41}$ und $R^{51}$ gebildet wird) darstellt, Z′ ein Alkalimetallatom oder ein Alkylammoniumsalz darstellt; und m′ eine reelle Zahl von 1 bis 2 darstellt.

8. Farbstoff gemäss Anspruch 1 und mit der folgenden allgemeinen Formel I-2:

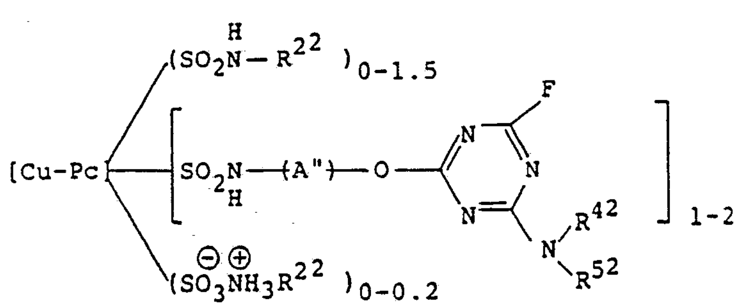

(I-2)

worin [Cu-Pc] einen Kupfer-phthalocyanin-Rest darstellt; $R^{22}$ eine substituierte oder unsubstituierte Alkylgruppe darstellt; (A'') eine Alkenylgruppe darstellt; und $R^{42}$ und $R^{52}$ je ein Wasserstoffatom oder eine substituierte oder unsubstituierte Alkylgruppe darstellen.

9. Farbstoff gemäss Anspruch 1 und welcher die folgende allgemeine Formel I-3 aufweist:

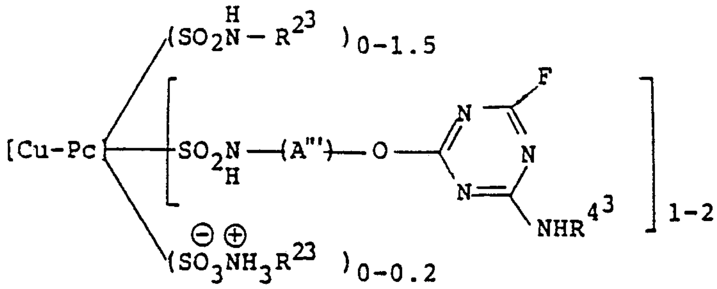

(I-3)

worin [Cu-Pc] einen Kupfer-phthalocyanin-Rest darstellt; $R^{23}$ eine Niederalkylgruppe oder eine durch eine Hydroxylgruppe oder eine Niederalkoxygruppe substituierte Alkylgruppe darstellt; A''' eine Gruppe mit 2 bis 4 Kohlenstoffatomen darstellt; und $R^{43}$ eine Niederalkylgruppe oder eine durch eine Niederalkoxygruppe substituierte Niederalkylgruppe darstellt.

10. Verfahren zur Herstellung eines Phthalocyanin-Reaktivfarbstoffes der allgemeinen Formel I, wie in Anspruch 1 dargestellt und definiert, umfassend die Reaktion eines Säurechlorides der allgemeinen Formel III:

$$[Pc]\ (SO_2Cl)_q \qquad (III)$$

(worin [Pc] wie oben definiert ist und q eine reelle Zahl von 1 bis 4 ist) mit einem Amin der folgenden allgemeinen Formel IV:

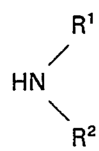

(IV)

(worin $R^1$ und $R^2$ wie oben definiert sind) und einem substituierten Amin der folgenden allgemeinen Formel V:

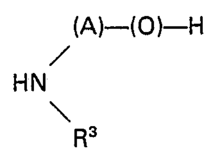

(V)

(worin $R^3$ und (A) wie oben definiert sind) nacheinander oder gleichzeitig in einem wässrigen Lösungsmittel oder einem organischen Lösungsmittel in Gegenwart eines Säurebefreiungsmittels, während 2 bis 24 Std. bei einer Temperatur von 0 bis 30°C, um eine Verbindung der folgenden allgemeinen Formel VI herzustellen:

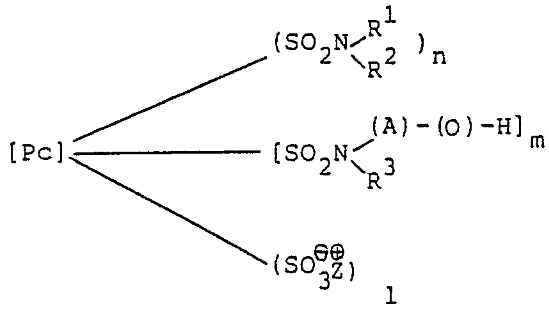

[VI]

(worin [Pc] $R^1$, $R^2$, $R^3$, (A), X, Z, l, m und n wie oben definiert sind); Unterwerfung der so erhaltenen Verbindung der Formel VI einer Dihalogencyanur-Reaktion in einem Lösungsmittel, in Gegenwart eines Säurebefreiungsmittels bei einer Temperatur von −5 bis 10°C, um eine Verbindung der allgemeinen Formel VII zu erhalten:

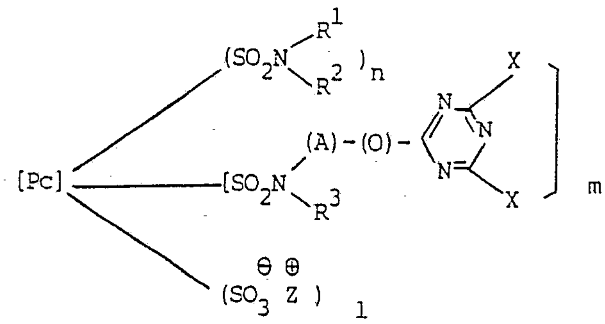

(VII)

(worin [Pc] $R^1$, $R^2$, $R^3$, (A), X, Z, l, m und n wie oben definiert sind); und dann Umsetzung der so erhaltenen Verbindung der allgemeinen Formel VIII:

$$YH \quad (VIII)$$

(worin Y wie oben definiert ist) in einem LÖsungsmittel, in Gegenwart eines Säurebefreiungsmittels während 2 bis 10 Std. bei einer Temperatur von −5 bis 10°C.

**Revendications**

1. Colorant phthalocyanine réactif caractérisé par la formule générale suivante (I):

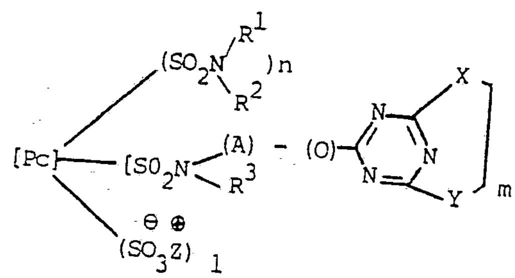

[I]

dans laquelle (Pc) représente un résidu phthalocyanine de cuivre ou un résidu phthalocyanine de nickel: $R^1$, $R^2$ et $R^3$ représente chacun un atome d'hydrogène, un groupe alkyle substitué ou non substitué, un groupe cyclohexyle, un groupe allyle ou un groupe aryle substitué ou non substitué; (A) représente un groupe alkylène substitué ou non substitué, un groupe arylène substitué ou non substitué, un groupe aralkylène ou $—R^7—O—R^8—$ (dans lequel $R^7$ et $R^8$ représentent chacun un groupe alkylène); X représente un atome de fluore ou un atome de chlore; Y représente $—NR^4R^5$ (dans lequel $R^4$ et $R^5$ représentent chacun un atome d'hydrogène, un groupe alkyle substitué ou non substitué, un groupe alkényle, un groupe cyclohexyle, un groupe aryle, un groupe aralkyle ou dans lequel $—NR^4R^5$ représente ensemble un anneau hétérocyclique à 5 membres ou 6 membres, contenant de l'azote, formé par liaison de $R^4$ et $R^5$) ou $—OR^6$ (dans lequel $R^6$ représente un atome d'hydrogène, un groupe alkyle substitué ou non substitué, un groupe alkényle, un groupe cyclohexyle, un groupe aryle ou un groupe aralkyle); Z représente un atome mètallique ou une base amine: l représente un nombre réel de 0 à 0,2; m représente un nombre réel de 1 à 4; et n représente un nombre réel de 0 à 2.

2. Colorant selon la revendication 1, dans lequel $R^1$, $R^2$ et $R^3$ représentent chacun un groupe alkyle substitué ou non substitué ayant de 1 à 10 atomes de carbone ou un groupe aryle substitué ou non substitué ayant de 6 à 8 atomes de carbone.

3. Colorant selon la revendication 1 ou la revendication 2, dans lequel A représente un groupe alkylène substitué ou non substitué ayant de 2 à 4 atomes de carbone, un groupe arylène substitué ou non substitué ayant 6 atomes de carbone, un groupe aralkylène ayant 7 ou 8 atomes de carbone ou un groupe alkyléne ayant 2 ou 3 atomes de carbone.

4. Colorant selon la revendication 1, la revendication 2 ou la revendication 3, dans lequel $R^4$ et $R^5$ représentent un groupe alkyle substitué ou non substitué ayant de 1 à 10 atomes de carbone, $R^6$ représente un groupe alkyle substitué ou non substitué ayant de 1 à 6 atomes de carbone, et $R^4$, $R^5$ et $R^6$ représentent un groupe alkényle ayant de 3 à 5 atomes de carbone, un groupe aryle ayant de 6 à 8 atomes de carbone, et un groupe aralkyle ayant de 7 à 10 atomes de carbone.

5. Colorant selon la revendication 1, la revendication 2 ou la revendication 3, dans lequel le dit anneau hétérocyclique à 5 ou 6 membres contenant de l'azote est un groupe 1-pyrrolidinyle, un groupe 3-méthyl-1-pyrrolidinyle, groupe 2-hydroxyéthyl-1-pyrrolidinyle, un groupe 2,5-dimèthyl-1-pyrrolidinyle, un groupe 3-thiazolidinyle, un groupe 1-pyrrolyle, un groupe 1-imidazolyle, un groupe morpholino, un groupe

pipéridino, un groupe 2,6-diméthylpipéridino, un groupe 1-pipéradinyle ou un groupe 4-méthyl-1-pipéradinyle.

6. Colorant selon l'une quelconque des revendications précédentes, dans lequel la dite base amine est représentée par la formule générale suivante (II):

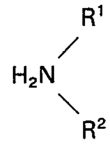

(II)

dans lequel $R^1$ et $R^2$ sont définis comme dans la formule générale (I).

7. Colorant selon la revendication 1 et ayant la formule générale suivante (I-1):

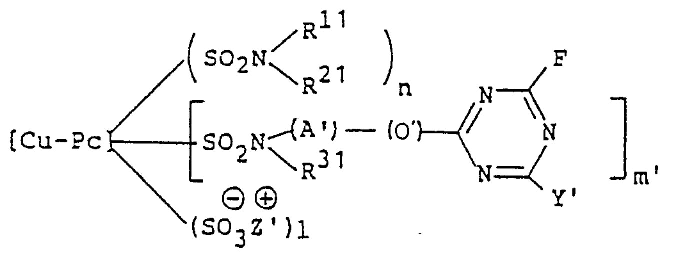

(I-1)

dans lequel (Cu-Pc) représente un résidu phthalocyanine de cuivre; $R^{11}$, $R^{21}$, $R^{31}$ représentent chacun un atome d'hydrogène ou un groupe alkyle substitué ou non substitué; (A') représente un groupe alkylène ou $—R^{71}—O—R^{81}—$ (dans lequel $R^{71}$ et $R^{81}$ représentent chacun un groupe alkylène inférieur); Y' représente $—NR^{41}—R^{51}$ (dans lequel $R^{41}$ et $R^{51}$ représentent chacun un atome d'hydrogène, un groupe alkyle substitué ou non substitué, un groupe alkényle, un groupe cyclohexyle, un groupe aryle, un groupe aralkyle ou dans lequel $—NR^{41}R^{51}$ représente ensemble un anneau hétérocyclique à 5 membres contenant de l'azote formé par liaison de $R^{41}$ et $R^{51}$), Z' représente un atome de métal alcalin ou un sel ammoniac d'alkyle; et m' représente un nombre réel de 1 à 2.

8. Colorant selon la revendication 1 et ayant la formule générale suivante (I-2):

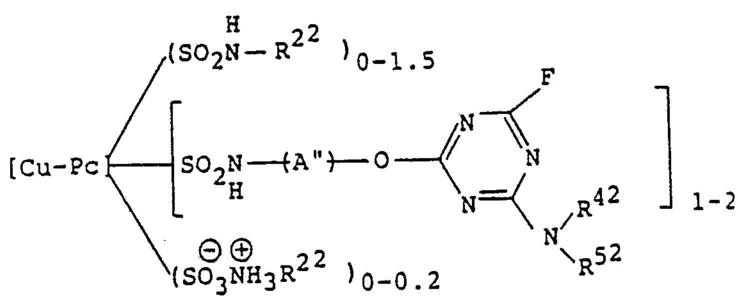

(I-2)

dans lequel (Cu-Pc) représente un résidu phthalocyanine de cuivre; $R^2$ représente un groupe alkyle substitué ou non substitué; (A'') représente un groupe alkylène; et $R^{42}$ et $R^{52}$ représentent chacun un atome d'hydrogène ou un groupe alkyle substitué ou non substitué.

9. Colorant selon la revendication 1 et ayant la formule générale suivante (I-3):

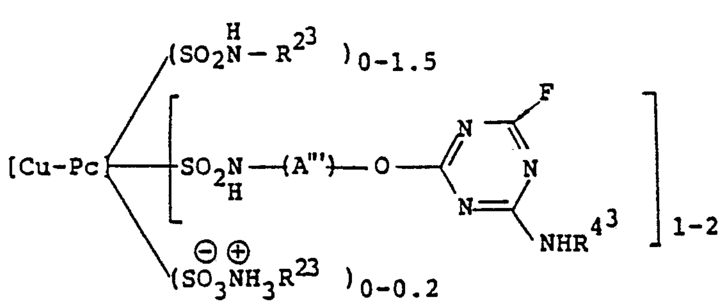

(I-3)

dans lequel (Cu-Pc) représente un résidu phthalocyanine de cuivre; $R^{23}$ représente un groupe alkyle inférieur ou un groupe alkyle inférieur substitué par un groupe hydroxyle ou un groupe alkoxy inférieur;

A''' représente un groupe ayant de 2 à 4 atomes de carbone; et $R^{43}$ représente un groupe alkyle inférieur ou un groupe alkyle inférieur substitué par un groupe alkoxy inférieur.

10. Procédé de préparation d'un colorant phthalocyanine réactif représenté par la formule générale (I), tel qu'exposé et défini dans la revendication 1, consistant entre autre à faire réagir un chlorure d'acide représenté par la formule générale (III):

$$[Pc]\ (SO_2Cl)_q \qquad (III)$$

(dans lequel (Pc) est tel que défini ci-dessus et qu est un nombre réel de 1 à 4) avec une amine représentée par la formule générale suivante (IV):

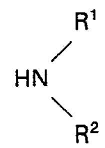

(IV)

(dans lequel $R^1$ et $R^2$ sont tels que définis ci-dessus) et une amine substituée représentée par la formule générale suivante (V):

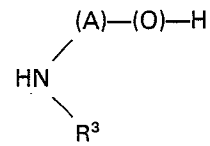

(V)

(dans lequel $R^3$ et (A) sont tels que définis ci-dessus), l'une après l'autre ou en même temps, dans un solvant aqueux ou un solvant organique, en présence d'un neutralisant d'acide, pendant 2 à 24 heures à une température de 0°C à 30°C pour produire un composé représenté par la formule générale suivante (VI):

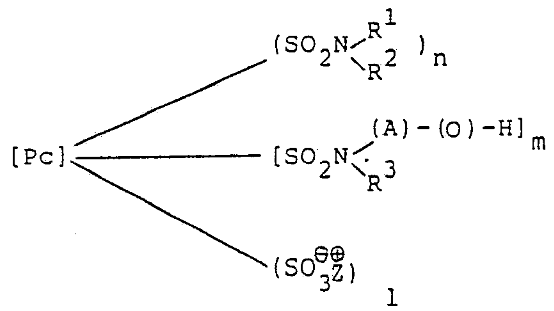

[VI]

(dans lequel (Pc), $R^1$, $R^2$, $R^3$, (A), X, Z, l, m et n sont tels que définis ci-dessus); à soumettre le composé de la formule générale (VI) ainsi obtenu à une dihalogénocyanuration dans un solvant en présence d'un neutralisant d'acide, à une température allant de −5°C à 10°C pour produire un composé représenté par la formule générale suivante (VII):

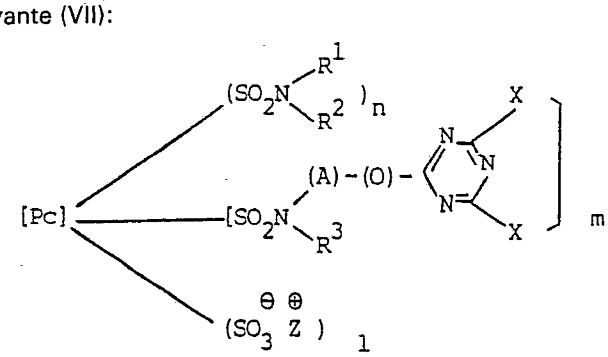

(VII)

(dans lequel (Pc), $R^1$, $R^2$, $R^3$, (A), X, Z, l, m et n sont tels que définis ci-dessus); et à faire ensuite réagir le composé de la formule générale (VII) ainsi produit avec un alcool ou une amine représenté par la formule générale suivante (VIII):

$$YH \qquad (VIII)$$

(dans lequel Y est tel que défini ci-dessus) dans un solvant, en présence d'un neutralisant d'acide pendant 2 à 20 heures à une température de −5°C à 10°C.